## Europäisches Patentamt
## European Patent Office
## Office européen des brevets

(19)

(11) Numéro de publication: **0 228 932**
**B1**

(12)

# FASCICULE DE BREVET EUROPEEN

(45) Date de publication du fascicule du brevet:
20.09.89

(51) Int. Cl.⁴: **G01V 1/22**

(21) Numéro de dépôt: 86402589.5

(22) Date de dépôt: 21.11.86

(54) **Dispositif utilisable en prospection sismique marine pour la réception de signaux sismiques et leur transmission à un système central de commande et d'enregistrement.**

(30) Priorité: 25.11.85 FR 8517498

(43) Date de publication de la demande:
15.07.87 Bulletin 87/29

(45) Mention de la délivrance du brevet:
20.09.89 Bulletin 89/38

(84) Etats contractants désignés:
BE DE GB IT NL

(56) Documents cités:
FR-A- 2 036 151
US-A- 3 938 073
US-A- 4 023 140
US-A- 4 177 357
US-A- 4 464 739

IEEE INTERCOM CONFERENCE, 1975, article
no. 22/4, pages 1-8; R.C. SWENSON: "New
sensor-cable technology for ocean applications"

(73) Titulaire: INSTITUT FRANCAIS DU PETROLE, 4, Avenue
de Bois-Préau, F-92502 Ruell-Malmaison(FR)

(72) Inventeur: Beauducel, Claude, 8, rue Talon,
F-60119 Henonville(FR)
Inventeur: Fouquet, Pierre, 44, rue de l'Ermitage,
F-95100 Argenteuil(FR)

(74) Mandataire: Kermarrec, Michelle et al, Institut Français
du Pétrole 4, avenue de Bois-Préau,
F-92502 Ruell-Malmaison(FR)

## Description

L'invention a pour objet un dispositif pour recevoir des signaux sismiques et les transmettre à un système central de commande et d'enregistrement.

Plus particulièrement, l'invention concerne un dispositif de réception et de transmission où les signaux reçus par une pluralité de capteurs répartis à l'intérieur des éléments successifs d'une flûte sismique de grande longueur, sont regroupés préalablement à leur transmission dans des appareils d'acquisition électroniques.

Les signaux reçus par chacun des appareils d'acquisition durant un même cycle d'émission-réception, sont échantillonnés, numérisés et enregistrès.

A l'issue de chaque cycle et sur commande du système central, les différents appareils d'acquisition transmettent l'un après l'autre et séquentiellement les données qu'ils ont collectées sur une ou plusieurs voies de transmission commune(s).

Les appareils électroniques d'acquisition sont disposés par exemple dans des boitiers rigides intercalés entre les éléments de la flûte sismique. Un tel dispositif est décrit par exemple dans le brevet français 2.471.088.

La tendance actuelle dans le domaine de la géophysique est à l'allongement des flûtes sismiques.

L'accroissement du nombre total de récepteurs permet à la fois de réduire l'intertrace, c'est-à-dire l'intervalle entre deux emplacements successifs du profil sismique étudié, restitués par deux traces d'enregistrement adjacentes et aussi, par combinaison et traitement des signaux enregistrès, d'accroître la finesse de restitution des enregistrements.

Le nombre d'appareils électroniques intercalés et la densité d'intégration de composants qui y sont contenus, augmente.

L'alourdissement des boitiers qui en résulte présente de nombreux inconvénients particulièrement en prospection sismique marine où les flûtes sont constituées d'une pluralité d'éléments remplis d'un liquide de densité inférieure à celle de l'eau, qui leur assure une certaine flottabilité.

La présence de boitiers relativement lourds entre les éléments rend encore plus inégale la répartition des masses, ce qui a pour effet d'accroître la trainée et par conséquent les bruits parasites d'écoulement qui viennent se superposer aux signaux utiles.

La longueur des liaisons entre capteurs et appareils d'acquisition qui peut atteindre pour certains plusieurs dizaines de mètres, augmente considérablement leur sensibilité aux signaux parasites. Ceci est particulièrement vrai dans le cas où l'on utilise dans les flûtes des récepteurs acoustiques autres que des capteurs à céramiques et en particulier des hydrophones de grande longueur et de structure continue, dont la capacité est plus faible, à sensibilité égale.

Le dispositif selon l'invention permet d'éviter les inconvénients ci-dessus mentionnés.

Il comporte une série de sections interconnectées pourvues chacune d'une pluralité de récepteurs sismiques répartis sur sa longueur, des appareils d'acquisition disposés dans au moins une partie des boîtiers intercalés, pour numériser et mémoriser chacun des signaux provenant d'au moins d'un groupe de récepteurs sismiques auquel il est connecté par des moyens de connexion et des moyens de transmission numériques pour le transfert vers les appareils d'acquisition, de signaux d'interrogation provenant d'un dispositif central de commande et d'enregistrement et le transfert vers celui-ci des signaux émis séquentiellement par les appareils d'acquisition en réponse aux signaux d'interrogation.

Il est caractérisé en ce qu'il comporte un ensemble de modules électroniques, chacun d'eux étant disposé au voisinage d'un récepteur sismique et adapté à amplifier et filtrer les signaux qu'il reçoit de celui-ci, et en ce que les moyens de connexion reliant chaque groupe de récepteurs à l'appareil d'acquisition associé comportant une ligne de transmission unique, des commutateurs pour connecter les sorties des différents modules électroniques sur la ligne de transmission et des moyens de synchronisation comportant un élément-horloge disposé dans chaque appareil d'acquisition, une ligne de connexion commune reliant chaque élément-horloge à des éléments de commande disposés dans les différents modules électroniques, lesdits éléments de commande étant interconnectés les uns aux autres de manière à engendrer en séquence des signaux de commande dont la durée est égale à la période de répétition de l'horloge, lesquels signaux de commande sont appliqués respectivement aux différents commutateurs.

Avec une telle structure décentralisée où les fonctions de préamplification et de filtrage des signaux sismiques sont réalisés à proximité de chaque récepteur, les appareils d'acquisition ne conservent que les fonctions de numérisation, de mémorisation et de transmission multiplexée.

On réalise ainsi une meilleure répartition des fonctions et à volume de boitier égal, on peut augmenter les capacités d'acquisition de chaque appareil et le rendre compatible avec des éléments de flûte plus longs ou contenant plus de récepteurs.

La dispersion des modules électroniques à l'intérieur des sections de flûte, au voisinage des récepteurs, permet d'obtenir une meilleure répartition des masses et par conséquent un meilleur équilibre dans l'eau, ce qui diminue les bruits parasites d'écoulement.

Les éléments électroniques étant mieux répartis, on diminue aussi les risques de panne liés à la très forte concentration. On remarque en outre que les signaux sismiques captés par les récepteurs d'un même élément de flûte empruntent un câble de transmission analogique commun.

Le total de lignes de transmission contenu dans un même élément de flûte est par conséquent très inférieur à celui que l'on observe généralement dans les flûtes. Les risques de panne liés à la multiplicité de lignes se trouvent donc fortement réduits.

D'autres caractéristiques et avantages du dispositif apparaitront à la lecture de la description d'un mode de réalisation donné à titre d'exemple non limitatif, en se reportant aux dessins annexés où :

- la figure 1 représente schématiquement une flûte sismique marine remorquée en immersion,

- la figure 2 représente de façon très schématique une section de flûte sismique et un boîtier d'extrémité contenant un appareil d'acquisition de données sismiques,

- la figure 3 représente le schéma synoptique d'un module électronique associé à un récepteur quelconque d'une section de flûte, et

- la figure 4 représente le schéma synoptique d'un dispositif d'acquisition de données disposé dans un des boîtiers intercalés entre les éléments d'une flûte sismique.

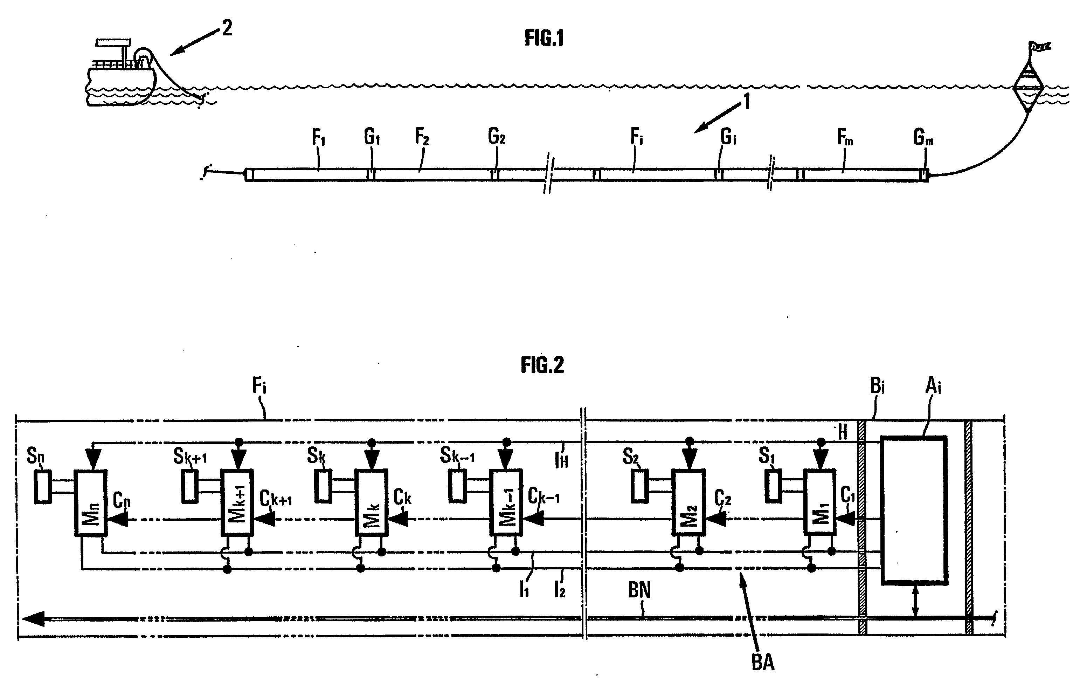

La flûte sismique schématisée à la figure 1 comporte une gaine souple 1 constituée d'une série d'éléments $F_1$, $F_2$...$F_i$...$F_m$ contenant chacun un ensemble de récepteurs sismiques, ces éléments étant raccordés les uns aux autres par des boîtiers de raccordement $G_1$, $G_2$...$G_i$...$G_m$ contenant des dispositifs d'acquisition de signaux.

La flûte sismique est remorquée en immersion par un navire 2 comportant un système central de commande et d'enregistrement.

Un tel ensemble est décrit par exemple dans le brevet français précité 2.471.088.

L'élément de flûte $F_i$ schématisé à la figure 2 comporte un ensemble de récepteurs sismiques $S_1$, $S_2$...$S_{k-1}$, $S_k$, $S_{k+1}$...$S_n$ répartis à intervalles réguliers sur toute sa longueur et associés respectivement à des modules électroniques $M_1$, $M_2$...$M_{k-1}$, $M_k$, $M_{k+1}$...$M_n$.

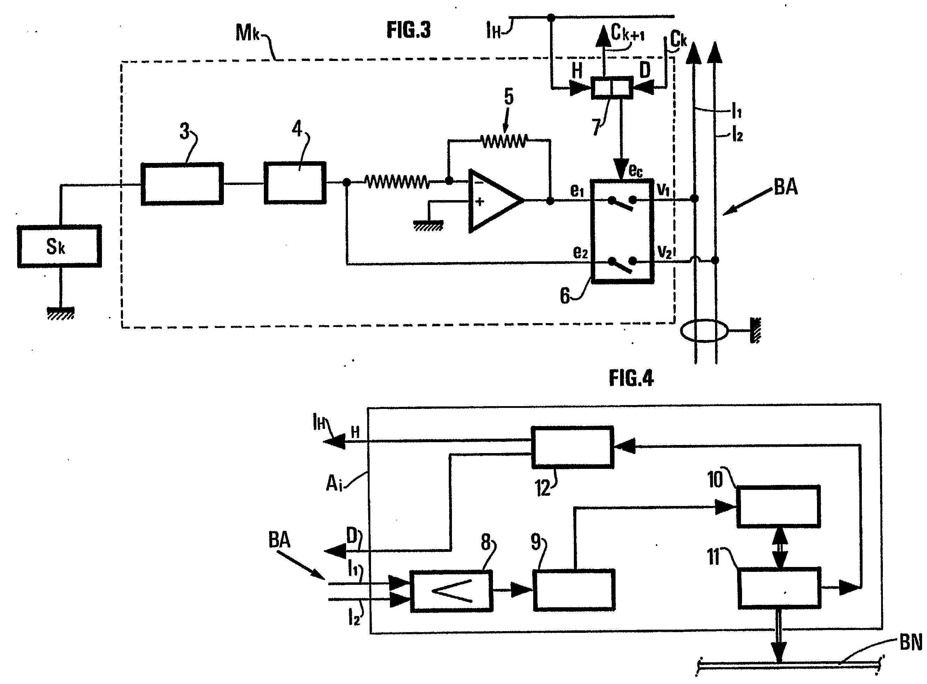

Chacun d'eux comporte (Fig. 3) un filtre passe-bas anti-repliement (antialiasing) 3 et un filtre coupe-bas 4 interconnectés en série. Les signaux délivrés par le récepteur associé $S_k$ sont appliqués aux filtres 3 et 4. La sortie du filtre 4 est connectée à l'entrée d'un amplificateur inverseur 5.

Les sorties du filtre 4 et de l'amplificateur 5 sont appliqués aux entrées $e_1$, $e_2$ d'un commutateur électronique à deux voies 6.

Les sorties $v_1$, $v_2$ du commutateur 6 sont respectivement connectés à deux fils conducteurs $l_1$ et $l_2$ d'une ligne bifilaire blindée constituant un bus analogique $B_A$.

L'entrée de commande $e_c$ du commutateur électronique 6 est connectée à une première sortie d'un basculeur bistable 7. Une première entrée de celui-ci est connectée à une ligne $l_H$ courant tout le long de la section de flûte $F_k$ qui véhicule un signal d'horloge H. Une seconde entrée du basculeur bistable 7 est connectée à une section de ligne $C_k$ provenant du module électronique précédent $M_{k-1}$.

La sortie complémentaire du basculeur 7 est connectée à la seconde entrée du basculeur identique contenu dans le module électronique suivant $M_{k+1}$.

L'application aux lignes $l_1$, $l_2$ du bus analogique de deux signaux en opposition de phase, l'un prélevé à la sortie du filtre 4, l'autre à la sortie de l'amplificateur inverseur 5, permet comme il est bien connu, de rejeter les signaux en mode commun et en particulier les signaux parasites.

Un câble multi-conducteurs ou bus numérique $B_N$ connecté à une première extrémité au dispositif central de commande et d'enregistrement installé sur le navire 2, est disposé tout le long de la flûte sismique 1. Il est utilisé pour les transferts de signaux de commande numérisés vers les différents appareils d'acquisition de la flûte depuis le dispositif central et en retour pour transférer vers celui-ci les données sismiques acquises à l'issue de chaque cycle d'enregistrement.

Le bus analogique $B_A$ (Fig. 2) est connecté, à une extrémité de l'élément de flûte $F_i$, à un appareil d'acquisition $A_i$.

Les signaux présents sur le bus $B_A$ sont appliqués à l'entrée d'un amplificateur à gain variable 8 (Fig. 4). Un tel amplificateur sismique à gain variable est décrit dans les brevets français 2.469.040 ou 2.487.603.

Les signaux amplifiés issus de l'amplificateur 8 sont numérisés dans un convertisseur analogique-numérique 9 puis rangés dans un organe de mémorisation 10.

L'appareil d'acquisition $A_i$ comporte également un ensemble de décodage et de commutation 11 adapté à décoder les signaux d'adresse et de commande circulant sur le bus numérique $B_N$.

Lorsque l'appareil d'acquisition $A_i$ est concerné, l'ensemble 11 connecte l'organe de mémorisation 10 au câble $B_N$ de manière que les signaux numérisés qui ont été collectés, soient transférés vers le système central d'enregistrement sur le navire.

L'ensemble de décodage et de commutation est adapté également à détecter et reconstituer des signaux de synchronisation provenant du système central par l'intermédiaire du bus numérique $B_N$.

Ces signaux de synchronisation sont appliqués à un élément horloge 12 adapté à créer le signal d'horloge H et à le transférer sur la ligne $l_H$ (Fig. 2), ainsi qu'un signal D de même fréquence que le signal d'horloge H et décalé par rapport à celui-ci, ce signal D étant émis sur la section de ligne $C_1$ vers le premier module $M_1$.

Le dispositif fonctionne de la manière suivante :

Les signaux sismiques captés par les récepteurs $S_1$ à $S_n$ de chaque élément de flûte, en réponse aux ondes émises par une source sismique remorquée par le navire et renvoyées par les discontinuités du sous-sol, sont amplifiées et filtrées dans les modules électroniques associés ($M_1$-$M_n$).

Une impulsion D émise sur la section de ligne $C_1$ par l'élément horloge 12 de chaque dispositif d'acquisition (Fig. 4) actionne le basculeur bistable 7 du premier module $M_1$ (Figs 2, 3). Celui-ci commande la fermeture du commutateur 6 et l'application du signal sismique capté par le récepteur $S_1$ au bus analogique $B_A$.

Le signal est transféré vers l'appareil d'acquisition associé jusqu'à l'arrivée par la ligne $L_H$ d'une impulsion d'horloge H. Le redéclenchement du basculeur 7 qui en résulte, ouvre le commutateur 6 et crée une impulsion qui est transmise par la section de ligne $C_2$ vers le basculeur 7 du module électronique suivant $M_2$. Par voie de conséquence, ce sont les signaux issus du module $M_2$ qui sont à leur tour émis positif d'acquisition.

De proche en proche, par ces déclenchements en cascade, tous les modules électroniques se connectent à leur tour sur le bus analogique $B_A$ et transfèrent un échantillon du signal capté par les récepteurs associés. L'ensemble des basculeurs 7 des différents modules constituent un registre à décalage à éléments répartis.

L'application d'une nouvelle impulsion D sur la section de ligne $C_1$, déclenche une nouvelle séquence de transfert d'un échantillon successivement depuis tous les modules électroniques vers l'appareil d'acquisition associé.

A l'issue du cycle d'émission-réception, chacun des dispositifs d'acquisition se connecte sur commande au bus numérique $B_N$ et transfère au système central à bord du navire tous les signaux échantillonnés qu'il a mémorisés.

## Revendications

1. - Dispositif de réception de grande longueur pour la prospection sismique marine comportant une série de sections interconnectées les unes aux autres par des boîtiers intercalés ($G_1$-$G_m$), chacune des sections comportant une pluralité de récepteurs sismiques ($S_1$-$S_n$) répartis sur sa longueur, des appareils d'acquisition $A_i$ disposés dans au moins une partie des boîtiers intercalés pour numériser et mémoriser chacun des signaux provenant d'au moins d'un groupe de récepteurs sismiques auquel il est connecté par des moyens de connexion et des moyens de transmission numériques (11, $B_N$ pour le transfert vers les appareils d'acquisition, de signaux de commande provenant d'un dispositif central de commande et d'enregistrement et le transfert vers celui-ci des signaux émis séquentiellement par les appareils d'acquisition en réponse aux signaux d'interrogation, caractérisé en ce qu'il comporte un ensemble de modules électroniques (M1 - $M_n$), chacun d'eux étant disposé au voisinage d'un récepteur sismique et adapté à amplifier et filtrer les signaux qu'il reçoit de celui-ci, et en ce que les moyens de connexion reliant chaque groupe de récepteurs à l'appareil d'acquisition associé comportent une ligne de transmission unique ($B_A$), des commutateurs (6) pour connecter les sorties des différents modules électroniques ($M_k$) sur la ligne de transmission ($B_A$) et des moyens de synchronisation comportant un élément-horloge (12) disposé dans chaque appareil d'acquisition ($A_i$) une ligne de connexion commune ($I_H$) reliant chaque élément-horloge à des éléments de commande disposés dans les différents modules électroniques, lesdits éléments de commande étant interconnectés les uns aux autres de manière à engendrer en séquence des signaux de commande dont la durée est égale à la période de répétition de l'horloge, lesquels signaux de commande sont appliqués respectivement aux différents commutateurs.

2 - Dispositif selon la revendication 1, caractérisé en ce que l'élément de commande de chaque module électronique ($M_k$) est un basculeur bistable (7), dont une première entrée est connectée à la ligne ($I_H$) de connexion à l'élément-horloge (12) et une seconde entrée connectée à une première sortie d'un basculeur bistable dans un autre module électronique ($M_{k-1}$) et une seconde sortie connectée au commutateur (6) correspondant, chacune des impulsions successives émises sur la ligne de connexion ($I_H$) ayant pour effet d'ouvrir le commutateur d'un module électronique ($M_k$) et de fermer le commutateur d'un autre module électronique ($M_{k-1}$), les intervalles de temps de connexion des différents modules électroniques sur chaque ligne de connexion ($I_H$) étant égaux et décalés les uns par rapport aux autres.

3. - Dispositif selon la revendication 2, caractérisé en ce que chaque ligne de transmission ($B_A$) est une ligne bifaire ($I_1$, $I_2$) et en ce que chaque module électronique ($M_k$) comporte un bifilaine commutateur (6) à deux voies dont les sorties sont connectées respectivement aux deux conducteurs de la ligne de transmission ($B_A$) correspondante, et un amplificateur inverseur (5) dont l'entrée et la sortie sont reliées respectivement aux deux entrées du commutateur (6).

4. - Dispositif selon la revendication 1 ou 2, caractérisé en ce que chaque appareil d'acquisition comporte des moyens (8) pour amplifier les signaux transmis successivement par les différents modules électroniques associés, des moyens de numérisation (9) des signaux amplifiés et des moyens de mémorisation (10) des signaux numérisés.

## Claims

1. Receiving device of long length for marine seismic surveys, comprising a number of sections interconnected to each other by intermediate units ($G_1$-$G_m$), each section comprising a number of seismic receivers ($S_1$-$S_n$) distributed over its length, devices for data acquisition $A_i$ provided in at least one part of the intermediate units in order to digitalise and memorise each of the signals originating from at least one group of seismic receivers to which it is connected by a means of connection and a means of digital transmission (11, $B_N$) for transfer to the data acquisition devices of control signals originating from a central control and recording device and the transfer to this device of signals transmitted in sequence by the data acquisition devices in reply to interrogation signals, characterised in that it comprises a number of electronic modules (M1-$M_n$), each of these being arranged close to a seismic receiver and designed to amplify and filter the signals received from it and that the means of connection linking each group of receivers to the associated data acquisition device comprises a single transmission line ($B_A$), switches (6) to connect the outputs from different electronic modules ($M_k$) to the transmission line ($B_A$) and a means of synchronisation which comprises a clock unit (12) provided in each data acquisition device ($A_i$), a common connecting line ($I_H$) connecting each clock unit to the control device provided in the different electronic modules, the said control devices being interconnected to each other so as to generate, in sequence, control signals, their duration being equal to the repetition period for the clock unit, the said control signals being applied respectively to the different switches.

2. Device in accordance with claim 1, characterised in that the control unit for each electronic module ($M_k$) comprises a bistable circuit (7), a first input being connected to the line ($I_H$) connecting into the clock unit (12) and a second input connected to a first output of a bistable circuit in another electronic module ($M_{k-1}$) and a second output connected to the corresponding switch (6), each of the successive pulses transmitted over the connecting line ($I_H$) opening the switch of an electronic module ($M_k$) and closing the switch of another electronic module ($M_{k-1}$), the intervals of time for connecting the different electronic modules onto each connecting line ($I_H$) being equal and offset relative to each other.

3. Device in accordance with claim 2, characterised in that each transmission line ($B_A$) is a two-wire line ($I_1$, $I_2$) and that each electronic module ($M_k$) comprises a two-way switch (6) where the outputs are connected respectively to the two-way switch (6) where the outputs are connected repectively to the two conductors forming the corresponding transmission line ($B_A$) and an inverging amplifier (5), the input and output being connected respectively to the two inputs for the switch (6).

4. Device in accordance with claim 1 or 2, characterised in that each data acquisition device comprises a means (8) to amplify the signals transmitted successively by the different associated electronic modules, a means of digitalisation (9) for the amplified signals and a means of memorisation (10) for the digitalised signals.

## Patentansprüche

1. Empfangsvorrichtung großer Länge zur meeresseismischen Prospektion mit einer Reihe untereinander durch zwischengeschaltete Gehäuse ($G_1$–$G_m$) verbundener Abschnitte, wobei jeder der Abschnitte eine Vielzahl seismischer über ihre Länge verteilter Empfänger ($S_1$–$S_n$) umfaßt, mit Erfassungsgeräten $A_i$, die in wenigstens einem Teil der zwischengeschalteten Gehäuse angeordnet sind, um jedes der Signale zu digitalisieren und zu speichern, welches aus wenigstens einer Gruppe seismischer Empfänger stammt, wobei die Verbindung hierzu über Anschlußeinrichtungen erfolgt und mit digitalen Übertragungseinrichtungen (11, $B_N$) für die Übertragung – zu den Erfassungsgeräten – von Steuersignalen, die aus einer zentralen Steuer- und Aufzeichnungseinheit stammen, wobei gegen diese Signale übertragen werden, die sequentiell von den Erfassungsgeräten als Antwort auf Abfragesignale ausgesandt sind, dadurch gekennzeichnet, daß sie eine Anordnung elektronischer Modulen (M1–Mn) umfaßt, von denen ein jeder benachbart einem seismischen Empfänger angeordnet und so ausgelegt ist, daß er die Signale, die er hiervon empfängt, verstärkt und filtert und daß die jede Gruppe von Empfängern mit dem zugeordneten Abfragegerät verbindenden Einrichtungen umfassen: eine einzige Übertragungsleitung ($B_A$), Schalter (6), um die Ausgänge der verschiedenen elektrischen Modulen ($M_k$) an die Übertragungsleitung ($B_A$) anzuschließen und Synchronisationseinrichtungen mit einem Taktgeberelement (12), das in jedem Abfragegerät ($A_i$) angeordnet ist, eine gemeinsame Anschlußleitung ($L_H$), die jedes Taktgeberelement mit Steuerelementen verbindet, die in den verschiedenen elektronischen Modulen angeordnet sind, wobei diese Steuerelemente untereinander derart verbunden sind, daß sequentiell Steuersignale erzeugt werden, deren Dauer gleich der Taktgeberwiederholperiode ist, wobei diese Steuersignale jeweils an unterschiedliche Schalter gelegt werden.

2. Vorrichtung nach Anspruch 1, dadurch gekennzeichnet, daß das Steuerelement jedes elektronischen Moduls ($M_k$) eine bistabile Kippschaltung (7) ist, von der ein erster Eingang mit der Anschlußleitung ($L_H$) an das Taktgeberelement (12) und ein zweiter Eingang mit einem ersten Ausgang einer bistabilen Kippschaltung in einem anderen elektronischen Modul ($M_{k-1}$) angschlossen ist und ein zweiter Ausgang mit dem entsprechenden Schalter (6) verbunden ist, wobei jeder der aufeinanderfolgenden ausgesandten Impulse an der Anschlußleitung ($L_H$) dafür sorgt, daß der Schalter eines elektronischen Moduls ($M_k$) geöffnet und der Schalter eines anderen elektronischen Moduls ($M_{k-1}$) geschlossen wird, wobei die Verbindungszeitintervalle der verschiedenen elektronischen Modulen an jeder Verbindungsleitung ($L_H$) gleich und einander gegenüber versetzt sind.

3. Vorrichtung nach Anspruch 2, dadurch gekennzeichnet, daß jede Übertragungsleitung ($B_A$) eine zweidrahtige Leitung ($L_1$, $L_2$) ist und daß jeder elektronische Modul ($M_k$) einen Zweiwegeschalter (6) umfaßt, dessen Ausgänge jeweils mit den Leitern der entsprechenden Übertragungsleitung ($B_A$) verbunden sind und ein Inverter-Verstärker (5) vorgesehen ist, dessen Eingang und Ausgang jeweils mit den Eingängen des Schalters (6) verbunden sind.

4. Vorrichtung nach Anspruch 1 oder 2, dadurch gekennzeichnet, daß jedes Abfragegerät Einrichtungen (8) zur Verstärkung der durch die verschiedenen zugeordneten elektronischen Modulen übertragenen Signale, Einrichtungen (9) zum Digitalisieren der verstärkten Signale und Einrichtungen (10) zum Speichern der digitalisierten Signale, aufweist.

**FIG.1**

**FIG.2**

FIG.3

FIG.4

EP 0 228 932 B1